(19) Europäisches Patentamt
European Patent Office
Office européen des brevets

(11) EP 4 474 429 A1

# (12) EUROPEAN PATENT APPLICATION
published in accordance with Art. 153(4) EPC

(43) Date of publication:
**11.12.2024 Bulletin 2024/50**

(21) Application number: **23749492.7**

(22) Date of filing: **16.01.2023**

(51) International Patent Classification (IPC):
***C08L 83/14*** *(2006.01)* ***C08K 3/01*** *(2018.01)*
***C08K 3/105*** *(2018.01)* ***C08L 83/06*** *(2006.01)*

(52) Cooperative Patent Classification (CPC):
**C08K 3/01; C08K 3/105; C08L 83/06; C08L 83/14**

(86) International application number:
**PCT/JP2023/000956**

(87) International publication number:
**WO 2023/149175 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.02.2022 JP 2022014638**

(71) Applicant: **SHIN-ETSU CHEMICAL CO., LTD.**
**Tokyo 1000005 (JP)**

(72) Inventor: **YAMADA Kunihiro**
**Annaka-shi, Gunma 379-0224 (JP)**

(74) Representative: **Mewburn Ellis LLP**
**Aurora Building**
**Counterslip**
**Bristol BS1 6BX (GB)**

## (54) THERMALLY CONDUCTIVE SILICONE COMPOSITION AND PRODUCTION METHOD THEREFOR

(57) A thermally conductive silicone composition comprising
(A) a crosslinked silicone gel,
(B) a silicone oil containing neither an aliphatic unsaturated bond nor an SiH group,
(C) a thermally conductive filler having an average particle diameter of 0.01-100 μm, the amount of which is 10-2,000 parts by mass per 100 parts by mass of the sum of the (A) and (B) components, and
(D) gallium or a gallium alloy having a melting point of -20 to 100°C, the amount of which is 1,000-10,000 parts by mass per 100 parts by mass of the sum of the (A) and (B) components.
The thermally conductive silicone composition has a high thermal conductivity and is excellent in terms of applicability and dislocation resistance.



Processed by Luminess, 75001 PARIS (FR)

## Description

### TECHNICAL FIELD

This invention relates to a heat conductive silicone composition having a high thermal conductivity and improved slide resistance and a method for preparing the same.

### BACKGROUND ART

Since electric and electronic devices typically generate heat during service, heat removal is necessary in order that the devices operate properly. Various heat conductive materials are proposed for the heat removal purpose. The heat conductive materials are generally divided into two types, (1) sheet-like materials which are easy to handle and (2) paste-like materials.

The sheet-like materials have the advantages of ease of handling and stability, but their heat dissipation ability is inferior to the paste-like materials because of essentially increased contact thermal resistance. Also, since the materials should have sufficient levels of strength and hardness to maintain the sheet shape, they fail to accommodate the tolerance between electric or electronic devices and heat dissipating members, with the risk that the devices can be broken by stresses.

On the other hand, the paste-like materials are compatible with the mass-scale manufacture when applicators or the like are used, and have the advantage of a satisfactory heat dissipation ability due to low contact thermal resistance. In the case of mass-scale manufacture by screen printing or the like, the paste should preferably have a lower viscosity. However, the paste having a low viscosity can be slid or shifted by thermal cycling impacts of devices, known as pump-out phenomenon. This results in insufficient heat removal, which can cause the devices to malfunction. While the following silicone compositions are proposed in the prior art, there is the demand for a heat conductive silicone composition having better performance and improved slide resistance.

### PRIOR ART DOCUMENTS

### PATENT DOCUMENTS

| | |
|---|---|
| Patent Document 1: | JP 3948642 |
| Patent Document 2: | JP 3195277 |
| Patent Document 3: | JP-A 2000-169873 |
| Patent Document 4: | JP-A 2006-143978 |
| Patent Document 5: | JP-A 2004-210856 |
| Patent Document 6: | JP-A 2005-162975 |
| Patent Document 7: | JP 5300408 |
| Patent Document 8: | JP 4796704 |
| Patent Document 9: | JP 3541390 |
| Patent Document 10: | JP 4130091 |
| Patent Document 11: | JP 5388329 |

### SUMMARY OF INVENTION

### TECHNICAL PROBLEM

An object of the invention, which has been made under the above-mentioned circumstances, is to provide a heat conductive silicone composition having a high thermal conductivity, ease of working, and improved slide resistance, and a method for preparing the same.

### SOLUTION TO PROBLEM

Making extensive investigations to attain the above object, the inventor has found that a heat conductive silicone composition comprising a crosslinked silicone gel, a specific silicone oil, especially one end hydrolyzable organopolysiloxane, a heat conductive filler, and gallium or a gallium alloy having a melting point of -20°C to 100°C has a high thermal conductivity and meets both ease of working and pump-out resistance. The invention is predicated on this finding.

Accordingly, the invention provides a composition and method, as defined below.

1. A heat conductive silicone composition comprising

   (A) a crosslinked silicone gel,
   (B) a silicone oil containing neither aliphatic unsaturated bonds nor SiH groups,
   (C) a heat conductive filler having an average particle size of 0.01 to 100 μm in an amount of 10 to 2,000 parts by weight per 100 parts by weight of components (A) and (B) combined, and
   (D) gallium or a gallium alloy having a melting point of -20°C to 100°C in an amount of 1,000 to 10,000 parts by weight per 100 parts by weight of components (A) and (B) combined.

2. The heat conductive silicone composition of 1, further comprising (E) a volatile solvent in an amount of 1 to 500 parts by weight per 100 parts by weight of components (A) and (B) combined.
3. The heat conductive silicone composition of 1 or 2 wherein component (B) contains (B-1) a silicone oil in the form of a one end hydrolyzable organopolysiloxane having the general formula (1):

[Chem. 1]

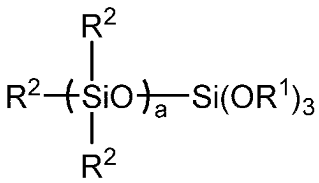

(1)

wherein $R^1$ is each independently a $C_1$-$C_6$ alkyl group, $R^2$ is at least one group selected from $C_1$-$C_{18}$ aliphatic unsaturation-free, unsubstituted or substituted monovalent hydrocarbon groups, and a is an integer of 5 to 120, and component (B) is blended in an amount of 10 to 90% by weight based on the total weight of components (A) and (B).
4. The heat conductive silicone composition of any one of 1 to 3 wherein component (A) is the addition reaction product of component (F) with component (G) in the presence of component (H), defined below,

   (F) an organopolysiloxane containing at least one silicon-bonded alkenyl group per molecule, represented by the average compositional formula (2):

   $$R^3_bR^4_cSiO_{(4-b-c)/2} \qquad (2)$$

   wherein $R^3$ is an alkenyl group, $R^4$ is an aliphatic unsaturation-free, unsubstituted or substituted monovalent hydrocarbon group, b is a number of 0.0001 to 0.2, c is a number of 1.7 to 2.2, and b+c is a number of 1.9 to 2.4,
   (G) an organohydrogenpolysiloxane containing at least 4 silicon-bonded hydrogen atoms at non-terminal positions of the molecular chain per molecule, and meeting the formula (3):

   $$0.1 < \alpha/\beta \qquad (3)$$

   wherein α is the number of silicon-bonded hydrogen atoms at non-terminal positions of the molecular chain and β is the total number of silicon atoms in component (G),
   (H) a platinum base catalyst.

5. The heat conductive silicone composition of any one of 1 to 4 wherein component (B) further contains (B-2) a non-functional liquid silicone oil having a kinematic viscosity of 10 to 500,000 $mm^2/s$ at 25°C, in an amount of 10 to 70% by weight of component (B).
6. The heat conductive silicone composition of any one of 1 to 5 wherein component (E) is an isoparaffin base solvent having a boiling point of 80 to 360°C.
7. A method of preparing the heat conductive silicone composition of 1, comprising the step of mixing components (B), (C) and (D).
8. A method of preparing the heat conductive silicone composition of 4, comprising the steps of mixing components

(F), (G) and (H) with components (B), (C) and (D), and heating the mixture to induce addition reaction of component (F) with component (G).

## ADVANTAGEOUS EFFECTS OF INVENTION

The heat conductive silicone composition of the invention has a high thermal conductivity, ease of working and slide resistance. A method for preparing the composition is also provided.

## DESCRIPTION OF EMBODIMENTS

Now the invention is described in detail. The invention provides a heat conductive silicone composition comprising

(A) a crosslinked silicone gel,
(B) a silicone oil containing neither aliphatic unsaturated bonds nor SiH groups,
(C) a heat conductive filler having an average particle size of 0.01 to 100 μm in an amount of 10 to 2,000 parts by weight per 100 parts by weight of components (A) and (B) combined, and
(D) gallium or a gallium alloy having a melting point of -20°C to 100°C in an amount of 1,000 to 10,000 parts by weight per 100 parts by weight of components (A) and (B) combined.

Component (A) is a crosslinked silicone gel which serves as a matrix of the heat conductive silicone composition. Component (A) is preferably a product obtained from addition reaction or hydrosilation reaction of component (F) with component (G) in the presence of component (H), as shown below,

(F) an organopolysiloxane containing at least one silicon-bonded alkenyl group per molecule, represented by the average compositional formula (2):

$$R^3_bR^4_cSiO_{(4-b-e)/2} \qquad (2)$$

wherein $R^3$ is an alkenyl group, $R^4$ is an aliphatic unsaturation-free, unsubstituted or substituted monovalent hydrocarbon group, b is a number of 0.0001 to 0.2, c is a number of 1.7 to 2.2, and b+c is a number of 1.9 to 2.4,
(G) an organohydrogenpolysiloxane containing at least 4 silicon-bonded hydrogen atoms at non-terminal positions of the molecular chain per molecule, and meeting the formula (3):

$$0.1 < \alpha/\beta \qquad (3)$$

wherein $\alpha$ is the number of silicon-bonded hydrogen atoms at non-terminal positions of the molecular chain and $\beta$ is the total number of silicon atoms in component (G), and
(H) a platinum base catalyst.

Component (F) is a base of component (A) and may be used alone or in admixture of two or more. Component (F) is an organopolysiloxane containing at least one silicon-bonded alkenyl group (or alkenyl group bonded to a silicon atom) per molecule, represented by the above average compositional formula (2). The organopolysiloxane contains preferably at least 2 alkenyl groups, more preferably 2 to 50 alkenyl groups, most preferably 2 to 20 alkenyl groups per molecule. The alkenyl groups may be bonded to silicon atoms at ends of the molecular chain, or silicon atoms at non-terminal positions of the molecular chain (i.e., other than both ends of the molecular chain), or combinations thereof.
In formula (2), $R^3$ is an alkenyl group of preferably 2 to 6 carbon atoms, more preferably 2 to 4 carbon atoms. Examples thereof include lower alkenyl groups such as vinyl, allyl, propenyl, isopropenyl, butenyl and isobutenyl, with vinyl being preferred.
$R^4$ is an aliphatic unsaturation-free, unsubstituted or substituted monovalent hydrocarbon group of preferably 1 to 10 carbon atoms, more preferably 1 to 6 carbon atoms. Examples thereof include alkyl groups such as methyl, ethyl, propyl, isopropyl, butyl, isobutyl, tert-butyl, pentyl, hexyl, cyclohexyl, octyl and decyl; aryl groups such as phenyl and tolyl; aralkyl groups such as benzyl and phenylethyl; and the foregoing groups in which some or all of the hydrogen atoms are substituted by halogen atoms, e.g., fluorine and chlorine, such as chloromethyl and 3,3,3-trifluoropropyl. For ease of synthesis, methyl, phenyl and 3,3,3-trifluoropropyl are preferred.
In formula (2), the values of b, c and b+c are as defined above, b is preferably a number of 0.0005 to 0.1, c is preferably a number of 1.9 to 2.0, and b+c is preferably a number of 1.95 to 2.05.

The molecular structure of the organopolysiloxane as component (F) is not particularly limited. It may have a linear structure, branched structure containing $R^3SiO_{3/2}$ units, $R^4SiO_{3/2}$ units, $SiO_2$ units or the like as part of the molecular chain wherein $R^3$ and $R^4$ are as defined above, cyclic structure, or three-dimensional network or resinous structure. Typically, it is a linear diorganopolysiloxane which has a backbone composed mainly of repeating diorganosiloxane units and is capped with triorganosiloxy groups at both ends of the molecular chain.

The organopolysiloxane as component (F) preferably has a kinematic viscosity at 25°C of 50 to 100,000 mm$^2$/s, more preferably 100 to 10,000 mm$^2$/s. As long as the kinematic viscosity is 50 to 100,000 mm$^2$/s, the cured product has better fluidity and workability. As used herein, the kinematic viscosity is measured at 25°C by an Ostwald viscometer (the same holds true, hereinafter).

Examples of the organopolysiloxane as component (F) include those having the general formula (4):

[Chem. 2]

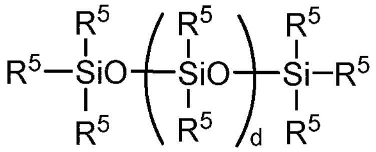

(4)

wherein $R^5$ is each independently an unsubstituted or substituted monovalent hydrocarbon group, at least one, preferably at least two of $R^5$ being alkenyl groups, and d is an integer of 20 to 2,000.

In formula (4), the unsubstituted or substituted monovalent hydrocarbon group represented by $R^5$ is the same as defined for $R^3$ (alkenyl group) and $R^4$ (aliphatic unsaturation-free unsubstituted or substituted monovalent hydrocarbon group), with the carbon count and illustrative examples being also the same. The subscript d is preferably an integer of 40 to 1,200, more preferably 50 to 600.

Illustrative examples of the organopolysiloxane having formula (4) include molecular chain both end dimethylvinylsiloxy-capped dimethylpolysiloxane, molecular chain one end trimethylsiloxy-capped, one end dimethylvinylsiloxy-capped dimethylpolysiloxane, molecular chain both end trimethylsiloxy-capped dimethylsiloxane/methylvinylsiloxane copolymers, molecular chain one end trimethylsiloxy-capped, one end dimethylvinylsiloxy-capped dimethylsiloxane/-methylvinylsiloxane copolymers, molecular chain both end dimethylvinylsiloxy-capped dimethylsiloxane/methylvinylsiloxane copolymers, and molecular chain both end dimethylvinylsiloxy-capped dimethylsiloxane/diphenylsiloxane copolymers.

[Component (G)]

Component (G) serves as a crosslinker by reacting with component (F). Component (G) is an organohydrogenpolysiloxane containing at least 4 silicon-bonded hydrogen atoms at non-terminal positions of the molecular chain per molecule and meeting the formula (3):

$$0.1 < \alpha/\beta \qquad (3)$$

wherein $\alpha$ is the number of silicon-bonded hydrogen atoms at non-terminal positions of the molecular chain and $\beta$ is the total number of silicon atoms in component (G). The number of silicon-bonded hydrogen atoms (or hydrogen atoms bonded to silicon atoms, i.e., SiH groups) at non-terminal positions of the molecular chain per molecule is at least 4 for the reason that no sufficient slide resistance is exerted if the number of silicon-bonded hydrogen atoms is 3 or less.

The requirement: $0.1 < \alpha/\beta$ should be fulfilled at the same time for the reason that the composition is degraded in slide resistance if the value of $\alpha/\beta$ is equal to or less than 0.1. The value of $\alpha/\beta$ is preferably at least 0.11, more preferably at least 0.12. Although the upper limit is not critical, the value of $\alpha/\beta$ is preferably up to 0.95, more preferably up to 0.90.

The molecular structure of component (G) is not particularly limited as long as the above requirements are fulfilled, and may be, for example, linear, cyclic, branched, or three-dimensional network (or resinous). Those organohydrogenpolysiloxanes in which the number of silicon atoms per molecule (or degree of polymerization) is typically 3 to 1,000, preferably 5 to 400, more preferably 10 to 300, even more preferably 10 to 100, most preferably 10 to 60 are desirable from the aspects of ease of handling and slide resistance of a cured product obtained from crosslinking of component (F).

The organohydrogenpolysiloxane as component (G) has a kinematic viscosity of typically 1 to 10,000 mm$^2$/s, preferably 3 to 5,000 mm$^2$/s, more preferably 5 to 3,000 mm$^2$/s, and is desirably liquid at room temperature (25°C).

Preferred examples of the organohydrogenpolysiloxane as component (G) include those having the average

compositional formula (5):

$$R^6_eH_fSiO_{(4-e-t)/2} \qquad (5)$$

wherein $R^6$ is an aliphatic unsaturation-free, unsubstituted or substituted monovalent hydrocarbon group, e is a number of 0.7 to 2.2, f is a number of 0.001 to 0.5, and e+f is a number of 0.8 to 2.5.

In formula (5), $R^6$ is an aliphatic unsaturation-free, unsubstituted or substituted monovalent hydrocarbon group of preferably 1 to 10 carbon atoms, more preferably 1 to 6 carbon atoms. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and the foregoing groups in which some or all of the hydrogen atoms are substituted by halogen atoms, e.g., fluorine and chlorine, such as 3,3,3-trifluoropropyl. Of these, alkyl, aryl and 3,3,3-trifluoropropyl groups are preferred, with methyl, phenyl and 3,3,3-trifluoropropyl being more preferred.

In formula (5), the values of e, f and e+f are as defined above, e is preferably a number of 0.9 to 2.1, f is preferably a number of 0.002 to 0.2, especially 0.005 to 0.1, and e+f is preferably a number of 1.0 to 2.3, especially 1.5 to 2.2.

The molecular structure of the organohydrogenpolysiloxane having formula (5) is not particularly limited, and may be linear, cyclic, branched, or three-dimensional network (or resinous). Those compounds having a silicon count per molecule and a kinematic viscosity in the above ranges and especially of linear structure are preferred.

Examples of the organohydrogenpolysiloxane having formula (5) include molecular chain both end trimethylsiloxy-capped dimethylsiloxane/methylhydrogensiloxane copolymers, molecular chain both end trimethylsiloxy-capped methylhydrogenpolysiloxane, molecular chain both end dimethylhydrogensiloxy-capped dimethylsiloxane/methylhydrogensiloxane copolymers, molecular chain both end dimethylhydrogensiloxy-capped methylhydrogensiloxane/dimethylsiloxane/diphenylsiloxane copolymers, molecular chain one end dimethylhydrogensiloxy-capped, one end trimethylsiloxy-capped dimethylsiloxane/methylhydrogensiloxane copolymers, molecular chain one end dimethylhydrogensiloxy-capped, one end trimethylsiloxy-capped methylhydrogensiloxane/dimethylsiloxane/diphenylsiloxane copolymers, copolymers consisting of $(CH_3)_2HSiO_{1/2}$ units, $(CH_3)_3SiO_{1/2}$ units, $(CH_3)HSiO_{2/2}$ units, and $SiO_{4/2}$ units, copolymers consisting of $(CH_3)_2HSiO_{1/2}$ units, $(CH_3)_3SiO_{1/2}$ units, $(CH_3)HSiO_{2/2}$ units, $(CH_3)_2SiO_{2/2}$ units, and $SiO_{4/2}$ units, copolymers consisting of $(CH_3)_2HSiO_{1/2}$ units, $(CH_3)HSiO_{2/2}$ units, $(CH_3)_2SiO_{2/2}$ units, and $SiO_{4/2}$ units, copolymers consisting of $(CH_3)_2HSiO_{1/2}$ units, $SiO_{4/2}$ units, $(CH_3)HSiO_{2/2}$ units, $(CH_3)_2SiO_{2/2}$ units, and $(C_6H_5)_3SiO_{1/2}$ units, and copolymers consisting of $(CH_3)_2HSiO_{1/2}$ units, $(CH_3)_3SiO_{1/2}$ units, $(C_6H_5)_2SiO_{2/2}$ units, $(CH_3)HSiO_{2/2}$ units, $(CH_3)_2SiO_{2/2}$ units, and $SiO_{4/2}$ units.

Component (G) is blended in such an amount that the number of silicon-bonded hydrogen atoms in component (G) is preferably 0.3 to 2.0, more preferably 0.4 to 1.5, even more preferably 0.5 to 1.0 per silicon-bonded alkenyl group in component (F). If the number of silicon-bonded hydrogen atoms is less than 0.3, the crosslinking density becomes too low and the resulting heat conductive silicone composition is degraded in slide resistance. If the number is more than 2.0, the resulting heat conductive silicone composition has too high a viscosity and is awkward to handle.

The organohydrogenpolysiloxane as component (G) may be used alone or in admixture of two or more.

[Component (H): platinum base catalyst]

Component (H) is to promote addition reaction of silicon-bonded alkenyl groups in component (F) with silicon-bonded hydrogen atoms in component (G). Component (H) is a platinum base catalyst, specifically platinum and/or platinum base compound.

Any well-known compounds may be used as the platinum and platinum base compound. Examples include platinum black, chloroplatinic acid, alcohol-modified chloroplatinic acids, and complexes of chloroplatinic acid with olefins, aldehydes, vinylsiloxanes, and acetylene alcohols.

The amount of component (H) blended may be a catalytic amount and properly adjusted depending on the desired cure speed, and is preferably 0.1 to 1,000 ppm, more preferably 1 to 300 ppm by weight calculated as platinum atom. If the amount is too small, the addition reaction may be substantially retarded, or crosslinking may not take place. If the amount is too large, the cured product is degraded in heat resistance and economy is lost because platinum is expensive.

The platinum base catalyst as component (H) may be used alone or in admixture.

[Other optional components]

In obtaining component (A) within the scope of the invention, a reaction inhibitor may be used in addition to the above components (F), (G) and (H). The reaction inhibitor used herein may be selected from prior art well-known reaction inhibitors used in addition curable silicone compositions. Examples include acetylene compounds, typically acetylene

alcohols such as 1-ethynyl-1-cyclohexanol and 3,5-dimethyl-1-hexyn-3-ol, nitrogen compounds such as tributylamine, tetramethylethylene diamine, and benzotriazole, organophosphorus compounds such as triphenylphosphine, oxime compounds, and organic chloro-compounds.

The crosslinked silicone gel as component (A) is obtained by heating and mixing components (F) and (G) in the presence of component (H) or platinum base catalyst so that crosslinking, i.e., addition reaction (or hydrosilation reaction) may take place. The reaction temperature is typically about 50 to 180°C, but not limited thereto. Although the reaction time varies depending on the heating temperature, the reaction typically takes place for 0.5 to 12 hours to a full extent. The product obtained by such treatment is defined as "crosslinked" product.

While components (B) to (E) will be described later, the invention may follow a procedure of effecting addition reaction (or hydrosilation reaction) of component (F) with component (G) in the presence of component (H) to produce component (A) and then mixing components (B) to (E) therewith; another procedure of admitting component (B) to components (F), (G) and (H) prior to heating, heating and mixing components (F) and (G) in the presence of component (H) to produce component (A), and then mixing components (C), (D) and (E) therewith; or a further procedure of admitting all of components (B) to (E) to components (F), (G) and (H) prior to heating, heating and mixing components (F) and (G) in the presence of component (H) to produce component (A). From the aspects of efficiency and safety, a still further procedure of mixing components (F), (G) and (H) with components (B), (C) and (D) prior to heating, heating the mixture to induce addition reaction of component (F) with component (G), optionally cooling, and adding component (E) is preferred.

[Component (B)]

Component (B), which does not participate in crosslinking of components (F) and (G), is a silicone oil containing neither aliphatic unsaturated bonds nor SiH groups and serves as a surface treatment agent for components (C) and (D) to be described later. Component (B) may be used alone or in admixture. It is preferably (B-1) a one end trifunctional, hydrolyzable organopolysiloxane having the general formula (1).

[Chem. 3]

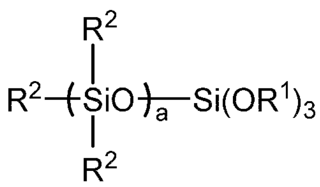

(1)

Herein $R^1$ is each independently a $C_1$-$C_6$ alkyl group, $R^2$ is at least one group selected from $C_1$-$C_{18}$ aliphatic unsaturation-free, unsubstituted or substituted monovalent hydrocarbon groups, and "a" is an integer of 5 to 120.

[Component (B-1)]

The organopolysiloxane having formula (1) as component (B-1) is used for the surface treatment of heat conductive filler as component (D). It functions to enhance the heat resistance of the heat conductive silicone composition because it helps particles to be heavily packed and covers the surface of particles to prevent particles from agglomerating, and the effect lasts even at high temperature.

In formula (1), $R^1$ is a $C_1$-$C_6$ alkyl group such as methyl, ethyl or propyl, with methyl and ethyl being preferred.

$R^2$ is each independently a $C_1$-$C_{18}$, preferably $C_1$-$C_{14}$ unsubstituted or substituted monovalent hydrocarbon group free of aliphatic unsaturation. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and the foregoing groups in which some or all of the hydrogen atoms are substituted by halogen atoms, e.g., fluorine and chlorine, such as 3,3,3-trifluoropropyl. Of these, alkyl, aryl and 3,3,3-trifluoropropyl groups are preferred, with methyl, phenyl and 3,3,3-trifluoropropyl being more preferred.

The subscript "a" is an integer of 5 to 120, preferably 10 to 90.

Component (B-1) should preferably have a kinematic viscosity at 25°C of 5 to 500 $mm^2/s$, more preferably 10 to 300 $mm^2/s$.

Examples of component (B-1) are shown below.

[Chem. 4]

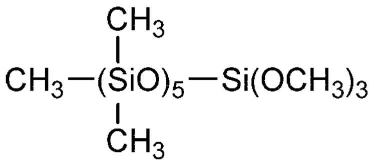

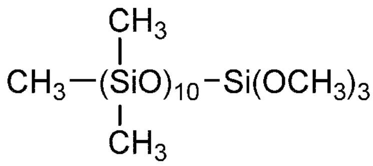

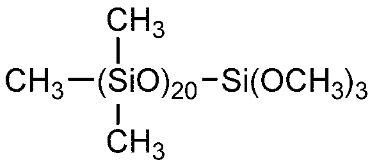

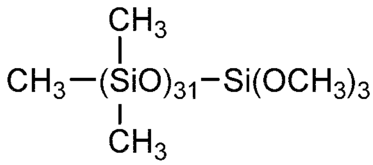

To component (B), (B-2) a non-functional liquid silicone oil free of reactive groups may be added as the silicone oil not participating in crosslinking. The non-functional liquid silicone oil as component (B-2) may be used alone or in admixture of two or more.

[Component (B-2)]

The non-functional liquid silicone oil as component (B-2) is an organopolysiloxane having a kinematic viscosity at 25°C of 10 to 500,000 $mm^2/s$, preferably 30 to 10,000 $mm^2/s$. If the kinematic viscosity of organopolysiloxane is below the lower limit, the resulting heat conductive silicone composition is liable to oil bleeding. If the kinematic viscosity exceeds the upper limit, the resulting composition has too high a viscosity to handle.

The non-functional liquid silicone oil as component (B-2) may be selected from prior art well-known organopolysiloxanes as long as it has a kinematic viscosity in the above range. The molecular structure of the organopolysiloxane (or silicone oil) is not particularly limited and may be linear, branched or cyclic. In particular, an organopolysiloxane of linear structure having a backbone consisting of repeating diorganosiloxane units and capped with triorganosiloxy groups at both ends of the molecular chain is preferred.

The non-functional liquid silicone oil may be represented by the average compositional formula (6).

$$R^7_gSiO_{(4-g)/2} \qquad (6)$$

In formula (6), $R^7$ is independently a $C_1$-$C_{18}$, preferably $C_1$-$C_{14}$ unsubstituted or substituted monovalent hydrocarbon group free of aliphatic unsaturation. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and the foregoing groups in which some or all of the hydrogen atoms are substituted by halogen atoms, e.g., fluorine and chlorine, such as 3,3,3-trifluoropropyl. Of these, alkyl, aryl and 3,3,3-trifluoropropyl groups are preferred, with methyl, phenyl and 3,3,3-trifluoropropyl being more preferred.

In formula (6), g is a number in the range of 1.8 to 2.2, preferably 1.9 to 2.1. As long as g is in the range, the resulting heat conductive silicone composition has the desired kinematic viscosity.

Of the organopolysiloxanes having formula (6), a linear organopolysiloxane having the formula (7) is preferred.

[Chem. 5]

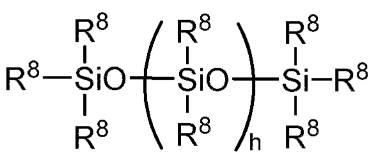

(7)

In formula (7), $R^8$ is each independently a $C_1$-$C_{18}$, preferably $C_1$-$C_{14}$ unsubstituted or substituted monovalent hydrocarbon group free of aliphatic unsaturation. Examples of the monovalent hydrocarbon group are as exemplified above for $R^7$ in formula (6). Most preferably, all groups $R^8$ are methyl. The subscript h is such a number that the

organopolysiloxane may have a kinematic viscosity at 25°C of 10 to 500,000 $mm^2/s$, preferably 30 to 10,000 $mm^2/s$, more preferably 100 to 8,000 $mm^2/s$.

Examples of component (B-2) are shown below.

[Chem. 6]

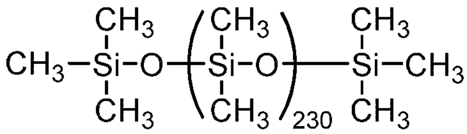

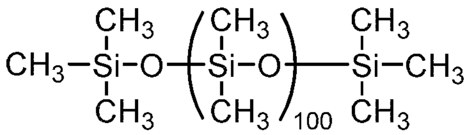

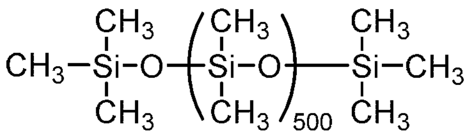

When used, component (B-2) is preferably blended in an amount of 10 to 70% by weight, more preferably 10 to 60% by weight, even more preferably 10 to 50% by weight of component (B). A too large amount of component (B-2) means a relatively reduced amount of component (B-1), resulting in insufficient surface treatment of heat conductive fillers as components (C) and (D). A too small amount of component (B-2) may detract from economy. When the amount of component (B-2) is in the range, the amount of component (B-1) is preferably 30 to 90% by weight, more preferably 40 to 90% by weight, even more preferably 50 to 90% by weight of component (B).

The silicone oil as component (B) is preferably blended in an amount of 10 to 90% by weight, more preferably 30 to 80% by weight, even more preferably 50 to 80% by weight based on the total weight of components (A) and (B). If component (B) is less than 10% by weight, the resulting composition may have a high viscosity and be awkward to handle. If component (B) is more than 90% by weight, the resulting composition may be degraded in slide resistance. When the amount of component (B) is in the range, the amount of component (A) is preferably 10 to 90% by weight, more preferably 20 to 70% by weight, even more preferably 20 to 50% by weight of component (B).

[Component (C)]

Component (C) is a heat conductive filler and may be used alone or in admixture of two or more. The type of the heat conductive filler is not particularly limited and any of powders used in conventional heat dissipating (or heat conductive) grease may be used. Those powders having a high thermal conductivity are recommended, for example, inorganic compound powders such as zinc oxide powder, alumina powder, boron nitride powder, aluminum nitride powder, aluminum hydroxide powder, and magnesium oxide powder. Also included are the foregoing inorganic compound powders which have been hydrophobized by surface treatment with organosilanes, organosilazanes, organopolysiloxanes, or organic fluorine compounds. Hydrophobic treatment may also be carried out with the organopolysiloxane having formula (1).

The heat conductive filler should have an average particle size of 0.01 to 100 μm, preferably 0.1 to 80 μm, more preferably 0.5 to 50 μm. When the average particle size of the heat conductive filler is outside the range, the resulting silicone composition cannot be increased in filling factor.

As used herein, the "average particle size" of component (C) refers to a particle diameter at 50% accumulation in the volume basis particle size distribution as measured by the laser diffraction/scattering method. For the measurement of the average particle size and particle size distribution of a powder by the laser diffraction/scattering method, for example, a particle size analyzer Microtrac MT3300EX (Nikkiso Co., Ltd.) may be used. The heat conductive filler may be of irregular, spherical or any other shape.

The heat conductive filler (C) is contained in an amount of 10 to 2,000 parts by weight, preferably 100 to 1,500 parts by weight, more preferably 100 to 1,000 parts by weight per 100 parts by weight of components (A) and (B) combined. An amount of component (C) below the lower limit fails to provide the silicone composition with a satisfactory thermal

conductivity whereas an amount in excess of the upper limit makes the silicone composition awkward to handle due to a viscosity buildup.

[Component (D)]

Component (D) is gallium or a gallium alloy having a melting point of -20°C to 100°C and may be used alone or in admixture of two or more. Component (D) should have a melting point of -20°C to 100°C, preferably -20°C to 50°C. If mp is lower than -20°C, such an alloy is uneconomic due to difficult preparation. If mp exceeds 100°C, such an alloy does not quickly melt in the composition preparation process, leading to inefficient working, or precipitates out during preparation, leading to non-uniformity. The melting point of gallium or a gallium alloy in the range of -20°C to 100°C indicates a necessary condition for economy and handling and is appropriate.

Metallic gallium has a mp of 29.8°C. Typical examples of the gallium alloy having a mp in the range include gallium-indium alloys, for example, Ga-In in a weight ratio 75.4 : 24.6 (mp = 15.7°C), gallium-tin-zinc alloys, for example, Ga-Sn-Zn in a weight ratio 82 : 12 : 6 (mp = 17°C), gallium-indium-tin alloys, for example, Ga-In-Sn in a weight ratio 21.5 : 16.0 : 62.5 (mp = 10.7°C) or a weight ratio 68.5 : 21.5 : 10 (mp = -19°C), gallium-indium-bismuth-tin alloys, for example, Ga-In-Bi-Sn in a weight ratio 9.4 : 47.3 : 24.7 : 18.6 (mp = 48.0°C).

The gallium or gallium alloy present in the composition as liquid micro-droplets or solid micro-particles is typically substantially spherical while particles of irregular shape may be contained therein. The average particle size is preferably 0.1 to 200 μm, more preferably 10 to 100 μm. When the average particle size is equal to or more than the lower limit, the composition is fully spreadable and efficient to apply because an extreme viscosity buildup is avoided. When the average particle size is equal to or less than the upper limit, separation is avoided. The dispersed state of micro-particles of the above-mentioned shape and average particle size is maintained even when the composition is stored at normal temperature because the composition has an appropriate viscosity.

It is noted that the particle size of component (D) is determined by automatic measurement of average particle size including taking an image of particles under a microscope and performing image binarization and automatic area measurement. For example, measurement is made using microscope VHX-8000 by Keyence Corp. Particles under test are sandwiched between two slide glass plates, their image is taken under a microscope, and the average particle size is automatically computed through the image processing function (automatic area measurement through image binarization) installed thereon.

The amount of component (D) blended is 1,000 to 10,000 parts by weight, preferably 1,500 to 7,000 parts by weight per 100 parts by weight of components (A) and (B) combined. If the amount of component (D) is less than 1,000 parts by weight, the composition has a lower thermal conductivity and fails to provide a sufficient heat dissipating ability when it is thick. If the amount of component (D) exceeds 10,000 parts by weight, it is difficult to establish a uniform composition, and a spreadable and greasy composition is not obtainable because of an extremely high viscosity.

[Component (E)]

Component (E) is a volatile solvent. It may be any of solvents in which components (A) and (B) are dissolvable or dispersible, for example, toluene, xylene, acetone, methyl ethyl ketone, cyclohexanone, n-hexane, n-heptane, butanol, isopropyl alcohol (IPA), and isoparaffin. Of these, isoparaffin base solvents are preferred from the standpoints of safety, hygiene, and printing efficiency.

The volatile solvent as component (E) has a boiling point of 80 to 360°C, preferably 150 to 350°C. If the boiling point is below 80°C, fast volatilization may take place to incur a viscosity buildup in the course of coating operation, which is troublesome. If the boiling point is above 360°C, there is a likelihood that the solvent remains in the heat conductive silicone composition and adversely affects the thermal properties thereof.

The amount of component (E) blended is preferably in the range of 1 to 500 parts by weight, more preferably 5 to 300 parts by weight, even more preferably 10 to 200 parts by weight per 100 parts by weight of components (A) and (B) combined. When the amount of component (E) is at least 1 part by weight, the heat conductive silicone composition has a lower viscosity at room temperature and is more effectively workable. When the amount is up to 300 parts by weight, the composition has higher storage stability.

Prior to the addition of component (E), the heat conductive silicone composition of the invention should preferably have a viscosity of at least 100 Pa s in view of slide resistance improvement and up to 2,000 Pa s in view of an adequate hardness relative to semiconductor chips, more preferably 300 to 1,500 Pa s and even more preferably 500 to 1,000 Pa s. After the addition of component (E), the silicone composition should preferably have a viscosity of at least 10 Pa s for preventing the heat conductive filler from settlement and up to 500 Pa s in view of handling, more preferably 30 to 400 Pa s and even more preferably 30 to 300 Pa·s. As used herein, the viscosity is measured at 25°C by a rotational viscometer (the same holds true, hereinafter).

The method of preparing the heat conductive silicone composition of the invention is not particularly limited. The

composition may be obtained by mixing components (A) to (D), and optionally adding component (E) and other components. The mixing machine is not particularly limited and a mixer such as planetary mixer, Trimix or Twin Mix may be used. Now that the step of mixing components (B), (C) and (D) is included, components (C) and (D) are surface-treated with component (B)

With respect to the step of mixing components (A) to (D) and optionally component (E), as mentioned above, component (A) may be prepared before components (B) to (E) are mixed therewith. Also, the raw materials (i.e., components (F), (G) and (H)) for component (A) may be mixed with components (B) to (E) and heated to produce component (A). Component (E) may be added after heating.

In the practice of the invention, the heat conductive silicone composition is applied as by screen printing and allowed to stand at room temperature for a certain time. As the volatile solvent volatilizes off, the heat conductive silicone composition builds up its viscosity and exerts satisfactory slide resistance performance.

When the heat conductive silicone composition is thinly coated to a heat sink or the like by printing means such as a metal screen, the solvent volatilizes at normal temperature or is readily volatilized by positive heating. This high performance silicone composition is ready for practical application although prior art heat conductive silicone compositions are difficult to coat uniformly and thinly.

The heat conductive silicone composition is advantageously used in such applications as the heat dissipation of heat-generating devices such as CPUs and GPUs in laptop computers and heat-generating devices in electronic control units (ECUs) mounted on vehicles.

## EXAMPLES

Examples and Comparative Examples are given below for further illustrating the invention although the invention is not limited thereto. Notably, the kinematic viscosity is measured at 25°C by an Ostwald viscometer. To demonstrate the superiority of the invention, tests were carried out in Examples and Comparative Examples as follows.

[Measurement of average particle size]

The average particle size of component (C) is a volume basis accumulative average diameter as measured by particle size analyzer Microtrac MT3300EX (Nikkiso Co., Ltd.).

The particle size of component (D) is measured by microscope VHX-8000 (Keyence Corp.).

[Thermal conductivity]

The thermal conductivity of a heat conductive silicone composition, before and after the addition of component (E), was measured at 25°C by the hot disk method according to ISO 22007-2, using meter TPS-2500S (Kyoto Electronics Mfg. Co., Ltd.).

[Viscosity of heat conductive silicone composition]

The viscosity of a heat conductive silicone composition, before and after the addition of component (E), was measured at 25°C by a rotational viscometer, specifically at 25°C by Malcom viscometer Type PC-10AA (Malcom Co., Ltd.).

[Printing efficiency]

A stainless steel (SUS) plate of 3 cm squares and 120 μm thick was cut out as a metal screen. Using the metal screen and a squeegee, a heat conductive silicone composition (grease) was coated onto a heat sink.

(Evaluation results)

O: uniform coating on overall surface
△: some irregularities on grease surface
×: cannot be coated because squeegee is wrapped with grease

A heat conductive silicone composition was sandwiched between two glass plates with a spacer of 0.3 mm thick so as to form a disc-shaped sample of diameter 1.5 cm. The test assembly was set on a thermal impact tester Model

TSE-11-A (Espec Corp.) such that the assembly was inclined 90° relative to the ground, and tested over 500 cycles between -40°C/30 min. and 125°C/30 min. After 500 cycles, the distance over which the heat conductive silicone composition was slid or shifted from the original position was measured.

<Judgment>

A slide distance within 1 mm is rated as good slide resistance.

[Appearance after sliding test]

The state of the heat conductive silicone composition after 500 cycles of the sliding test was observed. The composition is rated good (O) for no voids or crazing and poor (×) for voids or crazing.

[Examples and Comparative Examples]

A heat conductive silicone composition was prepared by charging a planetary mixer with components as shown in Tables 1 and 2 and conducting the following steps.

Namely, components (B), (C), (D), and (F) were admitted into the planetary mixer and mixed at room temperature for 10 minutes. Then components (G) and (H) were admitted to the mixer which was heated at a temperature of 170°C, after which heating and mixing was continued for 2 hours to effect hydrosilation reaction of components (F) and (G) to produce a crosslinked silicone gel as component (A). After the mixture was cooled below 40°C, component (E) was added thereto to complete the composition. The above tests were carried out on the resulting composition. The results are also shown in Tables 1 and 2.

[Component (B)]

(B-1-1)

[Chem. 7]

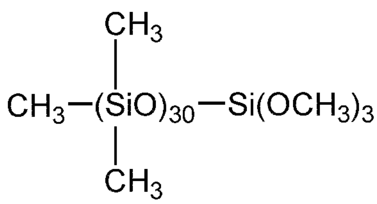

kinematic viscosity 35 mm$^2$/s

(B-2-1)
linear dimethylpolysiloxane capped with trimethylsilyl groups at both ends, 1,000 mm$^2$/s

[Component (C)]

(C-1) zinc oxide powder (average particle size 1.0 μm)

(C-2) alumina powder (average particle size 10 μm)

[Component (D)]

(D-1) metal gallium (mp 29.8°C)

(D-2) Ga-In alloy (weight ratio 75.4 : 24.6, mp 15.7°C)

(D-3) Ga-In-Bi-Sn alloy (weight ratio 9.4 : 47.3 : 24.7 : 18.6, mp 48.0°C)

(D-4) Ga-In-Sn alloy (weight ratio 68.5 : 21.5 : 10, mp -19°C)

(D-5) metal indium (mp 156.2°C) for comparison

[Component (E)]
(E-1) IP Solvent 2028 (trade name of isoparaffin base solvent, Idemitsu Kosan Co., Ltd., boiling point 210-254°C)

[Component (F)]

(F-1)
linear dimethylpolysiloxane capped with vinyl groups at both ends, having a kinematic viscosity of 600 $mm^2/s$

(F-2)
linear dimethylpolysiloxane capped with vinyl groups at both ends, having a kinematic viscosity of 30,000 $mm^2/s$

[Component (G)]

(G-1)

[Chem. 8]

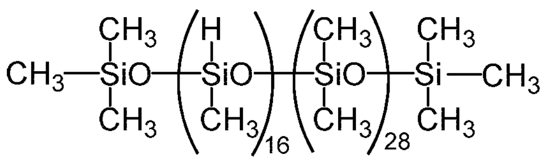

$\alpha/\beta$ = 0.35, kinematic viscosity 113 $mm^2/s$

(G-2)

[Chem. 9]

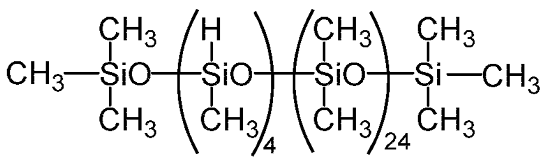

$\alpha/\beta$ = 0.13, kinematic viscosity 25 $mm^2/s$

[Component (H)]
(H-1)
solution of platinum-divinyltetramethyldisiloxane complex in the same dimethylpolysiloxane as (F-1) (Pt content: 1 wt%)

[Table 1]

| Amount of components (pbw) | | | Example 1 | Example 2 | Example 3 | Example 4 | Example 5 |
|---|---|---|---|---|---|---|---|
| Component (A) | Component (F) | (F-1) | 20.8 | 20.7 | 30.0 | 20.8 | 20.8 |
| | | (F-2) | | | 10.5 | | |
| | Component (G) | (G-1) | 0.4 | 0.5 | | 0.4 | 0.3 |
| | | (G-2) | | | 2.0 | | |
| | Component (H) | (H-1) | 0.17 | 0.17 | 0.17 | 0.17 | 0.17 |
| Component (B) | | (B-1-1) | 78.8 | 78.8 | 59.5 | 50 | 78.8 |
| | | (B-2-1) | | | | 28.8 | |
| Component (C) | | (C-1) | 430 | 250 | 300 | 700 | 430 |
| | | (C-2) | | | 300 | 300 | |
| Component (D) | | (D-1) | 3,300 | | | | 1,800 |
| | | (D-2) | | 2,000 | | | |
| | | (D-3) | | | 5,000 | | |
| | | (D-4) | | | | 3,300 | |
| Component (E) | | (E-1) | 40 | 30 | 120 | 60 | |
| H/Vi* | | | 0.64 | 0.81 | 0.75 | 0.64 | 0.48 |
| Test results | | | | | | | |
| Thermal conductivity before addition of component (E), W/mK | | | 7.6 | 6.8 | 8.9 | 8.0 | 6.0 |
| Thermal conductivity after addition of component (E), W/mK | | | 5.3 | 4.4 | 6.3 | 5.4 | - |
| Viscosity before addition of component (E), Pa·s | | | 680 | 800 | 980 | 750 | 300 |
| Viscosity after addition of component (E), Pa·s | | | 95 | 150 | 120 | 100 | - |
| Printing efficiency | | | ○ | ○ | ○ | ○ | ○ |
| Slide distance, mm | | | 0 | 0 | 0 | 0 | 0 |
| Appearance after sliding test | | | ○ | ○ | ○ | ○ | ○ |

[Table 2]

| Amount of components (pbw) | | | Comparative Example 1 | Comparative Example 2 | Comparative Example 3 | Comparative Example 4 | Comparative Example 5 | Comparative Example 6 |
|---|---|---|---|---|---|---|---|---|
| Component (A) | Component (F) | (F-1) | 20.8 | 20.8 | 20.8 | 20.8 | 20.8 | 20.8 |
| | | (F-2) | | | | | | |
| | Component (G) | (G-1) | 0.4 | 0.4 | 0.4 | 0.4 | 0.4 | |
| | | (G-2) | | | | | | |
| | Component (H) | (H-1) | 0.17 | 0.17 | 0.17 | 0.17 | 0.17 | |
| Component (B) | | (B-1-1) | 78.8 | 78.8 | 78.8 | 78.8 | 78.8 | 78.8 |
| | | (B-2-1) | | | | | | |
| Component (C) | | (C-1) | 430 | 430 | 430 | 1 | 3,000 | 430 |
| | | (C-2) | | | | | | |

(continued)

| Amount of components (pbw) | | Comparative Example 1 | 2 | 3 | 4 | 5 | 6 |
|---|---|---|---|---|---|---|---|
| Component (D) | (D-1) | | 500 | 12,000 | 3,300 | 3,300 | 3,300 |
| | (D-2) | | | | | | |
| | (D-3) | | | | | | |
| | (D-4) | | | | | | |
| | (D-5) | 3,300 | | | | | |
| Component (E) | (E-1) | 40 | 40 | 40 | 40 | 40 | 40 |
| H/Vi* | | 0.64 | 0.64 | 0.64 | 0.64 | 0.64 | - |
| Test results | | | | | | | |
| Thermal conductivity before addition of component (E), W/mK | | - | 1.1 | - | - | - | 7.5 |
| Thermal conductivity after addition of component (E), W/mK | | - | 0.7 | - | - | - | 5.2 |
| Viscosity before addition of component (E), Pa s | | not becoming uniform paste | 230 | not becoming uniform paste | not becoming uniform paste | not becoming uniform paste | 150 |
| Viscosity after addition of component (E), Pa s | | - | 30 | - | - | - | 20 |
| Printing efficiency | | - | ○ | - | - | - | ○ |
| Slide distance, mm | | - | 0 | - | - | - | 20 |
| Appearance after sliding test | | - | ○ | - | - | - | × |

**Claims**

**1.** A heat conductive silicone composition comprising

(A) a crosslinked silicone gel,
(B) a silicone oil containing neither aliphatic unsaturated bonds nor SiH groups,
(C) a heat conductive filler having an average particle size of 0.01 to 100 μm in an amount of 10 to 2,000 parts by weight per 100 parts by weight of components (A) and (B) combined, and
(D) gallium or a gallium alloy having a melting point of -20°C to 100°C in an amount of 1,000 to 10,000 parts by weight per 100 parts by weight of components (A) and (B) combined.

**2.** The heat conductive silicone composition of claim 1, further comprising (E) a volatile solvent in an amount of 1 to 500 parts by weight per 100 parts by weight of components (A) and (B) combined.

**3.** The heat conductive silicone composition of claim 1 or 2 wherein component (B) contains (B-1) a silicone oil in the form of a one end hydrolyzable organopolysiloxane having the general formula (1):

[Chem. 1]

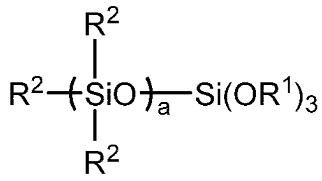

(1)

wherein $R^1$ is each independently a $C_1$-$C_6$ alkyl group, $R^2$ is at least one group selected from $C_1$-$C_{18}$ aliphatic unsaturation-free, unsubstituted or substituted monovalent hydrocarbon groups, and a is an integer of 5 to 120, and component (B) is blended in an amount of 10 to 90% by weight based on the total weight of components (A) and (B).

**4.** The heat conductive silicone composition of claim 1 or 2 wherein component (A) is the addition reaction product of component (F) with component (G) in the presence of component (H), defined below,

(F) an organopolysiloxane containing at least one silicon-bonded alkenyl group per molecule, represented by the average compositional formula (2):

$$R^3_b R^4_c SiO_{(4-b-c)/2} \qquad (2)$$

wherein $R^3$ is an alkenyl group, $R^4$ is an aliphatic unsaturation-free, unsubstituted or substituted monovalent hydrocarbon group, b is a number of 0.0001 to 0.2, c is a number of 1.7 to 2.2, and b+c is a number of 1.9 to 2.4,

(G) an organohydrogenpolysiloxane containing at least 4 silicon-bonded hydrogen atoms at non-terminal positions of the molecular chain per molecule, and meeting the formula (3):

$$0.1 < \alpha/\beta \qquad (3)$$

wherein $\alpha$ is the number of silicon-bonded hydrogen atoms at non-terminal positions of the molecular chain and $\beta$ is the total number of silicon atoms in component (G),
(H) a platinum base catalyst.

**5.** The heat conductive silicone composition of claim 1 or 2 wherein component (B) further contains (B-2) a non-functional liquid silicone oil having a kinematic viscosity of 10 to 500,000 $mm^2/s$ at 25°C, in an amount of 10 to 70% by weight of component (B).

**6.** The heat conductive silicone composition of claim 1 or 2 wherein component (E) is an isoparaffin base solvent having a boiling point of 80 to 360°C.

**7.** A method of preparing the heat conductive silicone composition of claim 1, comprising the step of mixing components (B), (C) and (D).

**8.** A method of preparing the heat conductive silicone composition of claim 4, comprising the steps of mixing components (F), (G) and (H) with components (B), (C) and (D), and heating the mixture to induce addition reaction of component (F) with component (G).

**INTERNATIONAL SEARCH REPORT**

International application No. **PCT/JP2023/000956**

**A. CLASSIFICATION OF SUBJECT MATTER**

***C08L 83/14***(2006.01)i; ***C08K 3/01***(2018.01)i; ***C08K 3/105***(2018.01)i; ***C08L 83/06***(2006.01)i
FI: C08L83/14; C08K3/01; C08K3/105; C08L83/06

According to International Patent Classification (IPC) or to both national classification and IPC

**B. FIELDS SEARCHED**

Minimum documentation searched (classification system followed by classification symbols)

C08K3/00 - 13/08, C08L1/00 - 101/14, C09K5/00 - 5/20, H01L23/34 - 23/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-194479 A (INOAC CORP, INOAC ELASTOMER KK) 21 July 2005 (2005-07-21) claims, paragraphs [0005], [0013]-[0015], [0018], [0026], [0028], examples | 1-8 |
| Y | JP 2021-169582 A (SHINETSU CHEMICAL CO) 28 October 2021 (2021-10-28) claims, paragraphs [0006], [0018], [0031]-[0034], [0036]-[0037], [0041], examples | 1, 3, 5, 7 |
| A | | 2, 4, 6, 8 |
| Y | WO 2021/079714 A1 (SHINETSU CHEMICAL CO) 29 April 2021 (2021-04-29) claims, paragraphs [0006], [0010]-[0030], [0057]-[0060], examples | 2, 4, 6, 8 |
| A | | 1, 3, 5, 7 |
| A | JP 2007-106809 A (MOMENTIVE PERFORMANCE MATERIALS JAPAN KK) 26 April 2007 (2007-04-26) entire text | 1-8 |
| A | JP 2018-188559 A (SHINETSU CHEMICAL CO) 29 November 2018 (2018-11-29) entire text | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/000956

C. DOCUMENTS CONSIDERED TO BE RELEVANT

| Category* | Citation of document, with indication, where appropriate, of the relevant passages | Relevant to claim No. |
|---|---|---|
| A | JP 2013-082816 A (SHINETSU CHEMICAL CO) 09 May 2013 (2013-05-09)<br>entire text | 1-8 |
| A | WO 2021/206064 A1 (SHINETSU CHEMICAL CO) 14 October 2021 (2021-10-14)<br>entire text | 1-8 |
| A | JP 2014-218564 A (SHINETSU CHEMICAL CO) 20 November 2014 (2014-11-20)<br>entire text | 1-8 |
| A | JP 2021-098804 A (SHINETSU CHEMICAL CO, TOYOTA MOTOR CORP) 01 July 2021 (2021-07-01)<br>entire text | 1-8 |
| A | JP 2002-121292 A (THE BERGQUIST COMPANY) 23 April 2002 (2002-04-23)<br>entire text | 1-8 |
| A | US 2003/0113556 A1 (DOW CORNING CORPORATION) 19 June 2003 (2003-06-19)<br>whole document | 1-8 |
| A | US 2021/0332280 A1 (DOW GLOBAL TECHNOLOGIES LLC, DOW SILICONES CORPORATION) 28 October 2021 (2021-10-28)<br>whole document | 1-8 |
| A | CN 112694869 A (HANGZHOU NUOMAI TECHNOLOGIES CO., LTD.) 23 April 2021 (2021-04-23)<br>whole document | 1-8 |
| A | CN 112980189 A (SYRELN XIAMEN NEW MATERIAL TECHNOLOGIES CO., LTD.) 18 June 2021 (2021-06-18)<br>whole document | 1-8 |

Form PCT/ISA/210 (second sheet) (January 2015)

**INTERNATIONAL SEARCH REPORT**
**Information on patent family members**

International application No.
**PCT/JP2023/000956**

| Patent document cited in search report | Publication date (day/month/year) | Patent family member(s) | Publication date (day/month/year) |
|---|---|---|---|
| JP 2005-194479 A | 21 July 2005 | (Family: none) | |
| JP 2021-169582 A | 28 October 2021 | WO 2021/210372 A1<br>claims, paragraphs [0006], [0018], [0031]-[0034], [0036]-[0037], [0041], examples | |
| WO 2021/079714 A1 | 29 April 2021 | EP 4050068 A1<br>claims, paragraphs [0006], [0010]-[0036], [0073]-[0075], examples | |
| JP 2007-106809 A | 26 April 2007 | (Family: none) | |
| JP 2018-188559 A | 29 November 2018 | WO 2018/207696 A1<br>whole document<br>TW 201903117 A<br>whole document | |
| JP 2013-082816 A | 09 May 2013 | US 2013/0087905 A1<br>whole document | |
| WO 2021/206064 A1 | 14 October 2021 | TW 202144505 A<br>whole document | |
| JP 2014-218564 A | 20 November 2014 | US 2016/0096984 A1<br>whole document<br>EP 2995651 A1<br>whole document | |
| JP 2021-098804 A | 01 July 2021 | EP 4083139 A1<br>whole document | |
| JP 2002-121292 A | 23 April 2002 | US 6339120 B1<br>whole document<br>EP 1143511 A2<br>whole document | |
| US 2003/0113556 A1 | 19 June 2003 | WO 2003/052818 A1<br>whole document | |
| US 2021/0332280 A1 | 28 October 2021 | WO 2020/093258 A1<br>whole document | |
| CN 112694869 A | 23 April 2021 | (Family: none) | |
| CN 112980189 A | 18 June 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3948642 B
- JP 3195277 B
- JP 2000169873 A
- JP 2006143978 A
- JP 2004210856 A
- JP 2005162975 A
- JP 5300408 B
- JP 4796704 B
- JP 3541390 B
- JP 4130091 B
- JP 5388329 B